Europäisches Patentamt

European Patent Office

Office européen des brevets

(11) Veröffentlichungsnummer: **0 261 421 B1**

# EUROPÄISCHE PATENTSCHRIFT

(45) Veröffentlichungstag der Patentschrift: **22.09.93**

(51) Int. Cl.⁵: **C12C 9/02**

(21) Anmeldenummer: **87112300.6**

(22) Anmeldetag: **25.08.87**

(54) **Verfahren zur Extraktion unpolarer Inhaltsstoffe aus Hopfen.**

(30) Priorität: **24.09.86 DE 3632401**

(43) Veröffentlichungstag der Anmeldung:
**30.03.88 Patentblatt 88/13**

(45) Bekanntmachung des Hinweises auf die
Patenterteilung:
**22.09.93 Patentblatt 93/38**

(84) Benannte Vertragsstaaten:
**AT BE CH FR GB IT LI NL**

(56) Entgegenhaltungen:
**DE-A- 2 223 698**
**GB-A- 1 477 705**
**GB-A- 2 072 657**

**JOURNAL OF THE INSTITUTE OF BREWING,
Band 86, Nr. 6, November-Dezember 1980,
London (GB); J.B. McRAE et al., Seiten
296-298&NUM;**

**FOOD TECHNOLOGY, Band 40, Nr. 7, Juli
1986, Chicago, IL (US); S.S.H. RIZVI et al.,
Seiten 57-64&NUM;**

(73) Patentinhaber: **Hopfen-Extraktion HVG Barth,
Raiser und Co.
Auenstrasse 18-20
D-85283 Wolnzach(DE)**

(72) Erfinder: **Forster, Adrian, Dr.
Schiessstättweg 10
D-8069 Wolnzach(DE)**
Erfinder: **Geyer, Stefan
Jägerstrasse 23
D-8069 Wolnzach(DE)**
Erfinder: **Schulmeyr, Josef
Schlossstrasse 2
D-8069 Wolnzach(DE)**
Erfinder: **Schmidt, Roland
Pfaffenhofener Weg 8
D-8069 Wolnzach(DE)**
Erfinder: **Gehrig, Manfred, Dr.
Lug ins Land 10
D-8069 Wolnzach(DE)**

(74) Vertreter: **Patentanwälte Czowalla. Matschkur
& Partner
Postfach 11 91 09
D-90101 Nürnberg (DE)**

**Beschreibung**

Die Erfindung richtet sich auf ein Verfahren zur Abtrennung der Rückstände von unpolaren Pflanzenschutzmitteln aus Hopfen unter gleichzeitiger Extraktion von unpolaren Inhaltsstoffen, bei dem der Hopfen in einer ersten Stufe mit einem verdichteten Gas, insbesondere $CO_2$, als Lösungsmittel behandelt wird, wobei ein Gemisch von Pflanzenschutzmittel und unter den gewählten Bedingungen löslichen Inhaltsstoffen extrahiert wird.

Die wertbestimmenden Inhaltsstoffe von Hopfen sind die Hopfenharze und Hopfenöle. Die wichtigsten Hopfenharze, die $\alpha$- und $\beta$-Bittersäuren sowie die sonstigen Weichharze haben unpolaren lipophilen Charakter, ebenso die Terpene und Sesquiterpene des Hopfenöles. Da alle Substanzen relativ instabil sind, existieren zahlreiche Möglichkeiten, die wesentlichen Inhaltsstoffe von Pflanzenmaterial durch Extraktion mit geeigneten Lösemitteln zu trennen und zu konzentrieren (vgl. zum Stand der Technik z.B. SANDER, W. und DEUBLEIN, B. in Brau-Industrie 1982, S. 997, sowie GB-A-2 072 657 und DE-A-2 223 698).

Als Extraktionsmittel kommen organische Lösungsmittel in Betracht, insbes. Dichlormethan, Hexan, Methanol ode Ethanol. In letzter Zeit wird auch die Extraktion von Hopfen mittels hochverdichtetem $CO_2$ beschrieben. Bei dem Verfahren gemäß DE-PS 21 27 618 wird nach Druck und Temperatur überkritisches $CO_2$ als Extraktionsmittel angewandt. Die Trennung der gewünschten Stoffe vom Lösungsmittel erfolgt anschließend durch Dichteerniedrigung unter Druckabsenkung mit gleichzeitiger $CO_2$-Verdampfung. Die so gewonnenen $CO_2$-Extrakte gelten in der Fachwelt als besonders rein und lagerstabil.

Hopfen wird während seiner Wachstumsperiode von März bis August mit zahlreichen Pflanzenschutzmitteln behandelt, die letztlich immer in irgendeiner Form zu Rückständen führen, wenn auch teilweise in geringen Mengen. In der BRD sind gegenwärtig ca. 40 Pflanzenschutzmittel für den Hopfenanbau erlaubt.

Die Rückstände dieser Pflanzenschutzmittel sind verständlicherweise in jedem Fall unerwünscht, wie die intensive Diskussion in der Öffentlichkeit unterstreicht. Besonders Rohstoffe für die Bierbereitung unterliegen einer kritischen Bewertung, da sich Bier aufgrund des Reinheitsgebotes als ein sehr sensibles Lebensmittel erwiesen hat. So wäre infolgedessen als vorteilhaft anzusehen, gelänge es, möglichst rückstandsarme Hopfen bzw. Hopfenprodukte zu erzeugen.

Zwar gelingt es bereits, den Anfall von Rückständen zu verringern, indem krankheistolerante Hopfensorten gezüchtet und angebaut werden; Rückstandsfreiheit ist jedoch ein unerreichbares Ziel. Durch die Extraktion mit Lösungsmitteln kann ebenfalls eine partielle Verarmung erreicht werden. Je selektiver ein Lösungsmittel ist, desto weniger Rückstände dürften extrahiert werden. Ergebnisse über z.B. Dithiocarbamatrückstände sind in Brauwelt, 1981, 825 (Nitz, S. et al) und Schwermetalle in Brauerei-Rundschau, Jg. 92, Juli 1981, Nr. 7 (Schur F. et al) publiziert worden. Wenn auch anzunehmen ist, daß das sehr selektive und unpolare Lösungsmittel $CO_2$ z.B. gegenüber Ethanol den Vorteil hat, daß es Pflanzenschutzmittel mit polarem Charakter nicht erfaßt, so existieren andererseits doch eine Anzahl unpolarer Pflanzenschutzmitel, die bei der $CO_2$-Extraktion aus der Pflanze gelöst werden können. So wird beispielsweise in Planta Medica Nr. 2, April 1984, S. 171 - 173, über die Möglichkeit beichtet, Rückstände von Pflanzenschutzmitteln aus Drogen mittels überkritischem Kohlendioxid zu entfernen. DDT und Hexachlorcyclohexan als lipophile Komponenten werden bei relativ niedrigen Drücken (80 - 120 bar) aus Drogen extrahiert, deren wertbestimmende Wirkstoffe erst bei höheren Drücken (> 150 bar) erfaßt werden oder sowieso polaren, in $CO_2$ unlöslichen Charakter haben. Die Autoren kommen zu dem Schluß, daß das geschilderte Verfahren nur bei Pflanzen anwendbar ist, die keine lipophilen Wirkstoffe, wie z.B. etherische Öle, enthalten.

Die aus Hopfen zu gewinnenden Wirkstoffe sind jedoch lipophil, und damit erweist sich das in Planta Medica beschriebene Verfahren auf Hopfen nicht anwendbar.

Die Versuche zur Verminderung des Rückstandsgehaltes wurden mit drei wichtigen Vertretern von Pflanzenschutzmitteln durchgeführt:

1. Folpet (N-Trichlormethylthiophthalimid) sowie
2. Metalaxyl (D, L-N-2,6-Dimethylphenyl-N-(2'methoxyacetyl)-alaninmethylester
als Fungizide und
3. Endosulfan (6, 7, 8, 9, 10, 10-Hexachlor-1,5,5a,6,9,9a-hexahydro-6,9-methano-2,4,3-benzo-dioxathiepin-3-oxyd)
als Insektizid.

Untersuchungen anhand des Fungizides Folpet (N-Trichlormethylthiophthalimid), welches vorzugsweise gegen Pilzbefall mit Peronospora, Phomapsis, Fusicladium, Botrytis u.a. verwendet wird, ergaben, daß bei allen bisher bekannten Bedingungen, sowohl im flüssigen Bereich (z.B. 70 bar, 15°C oder 150-300 bar, 25°C) als auch im überkritischen Bereich (150-300 bar, 40-80°C) mit $CO_2$ eine Extraktion erfolgt. Bei der notwendigen Abscheidung fallen also der Extrakt und das Folpet gemeinsam an. Eine Dekontamination kann bei 80-100 bar und 60°C von z.B. 50 ppm im Ausgangshopfen auf 0,5 ppm erfolgen. Dem Vorteil der 99%igen Rückstandsentfernung steht jedoch der Nachteil gegenüber, daß von dem löslichen Extrakt etwa 10-20 % ebenfalls mitgehen. Die Abscheidung dieses Extraktanteiles mit dem Folpet führt zu einem mit dem Rückstand stark angereichertem Produkt, das verworfen werden muß. Die Wirkstoffextraktion des so dekontaminierten Hopfens kann anschließend bei normalen Extraktionsbedingungen durchgeführt werden. Während also einerseits nahezu rückstandsfreier Extrakt entsteht, müßte andererseits ein untragbarer wirtschaftlicher Nachteil in Form des bei der Dekontamination anfallenden Extraktes in Kauf genommen werden.

Hieraus ergibt sich das Bedürfnis nach Abhilfe unter Abtrennung der Fungizidrückstände, ohne daß zugleich unerträgliche hohe Anteile an Hopfenextrakt verlorengehen. Es wird eine nahezu quantitative Entfernung der Fungizide angestrebt.

Zur Lösung dieser Aufgabe ist erfindungsgemäß vorgesehen, daß das Lösungsmittel mit dem darin enthaltenem Gemisch in einer zweiten Stufe, bei den gleichen Druckbedingungen wie bei der Extraktion, über ein Adsorbens, das Pflanzenschutzmittel bindet aber gegenüber Hopfeninhaltsstoffen keine Adsorptionswirkung entfaltet, geleitet wird, wodurch Pflanzenschutzmittel selektiv aus dem Gemisch entfernt werden.

Weitere Ausgestaltungen der erfindungsgemäßen Lösung sind in den Unteransprüchen beschrieben.

In der ersten Verfahrensstufe wird also das Extraktionsmittel, insbesondere $CO_2$, durch die Hopfenschüttung gepumpt. Hierbei werden die dem Hopfen anhaftenden Rückstände von Pflanzenschutzmitteln, in dem untersuchten beispielhaften Fall das Folpet, ebenso gelöst wie ein nicht unbeachtlicher Anteil an Hopfenölen und -harzen. In einem sich anschließenden zweiten Verfahrensgang wird die in der ersten Stufe gelöste Mischung aus Hopfenwirkstoffen und Pflanzenschutzmittel in einen Autoklaven überführt, der das Adsorbens enthält, welches nun das Pflanzenschutzmittel bindet und zurückhält, hingegen gegenüber den Harzen und Ölen des Hopfens keine Adsorptionswirkung entfaltet.

Die folgende Obersicht zeigt die adsorbierende Wirkung einiger Adsorbentien für Folpet sowie für die extrahierten Wertstoffe des Hopfens:

| Adsorptionsmittel | Adsorption von | |
| --- | --- | --- |
| | Folpet | Harz und Öl |
| Aktivkohle | + | + |
| Kieselgur grob | (+) | - |
| Kieselgur fein | (+) | - |
| Celite 545 | + | - |
| Celite 512 | - | - |
| Kieselgel 90 mesh | + | (-) |
| Ionenaustauscher | - | - |
| Aluminiumoxid | + | + |
| Magnesiumoxid | + | + |
| Na-Bentonit | + | (-) |
| PVPP (Polyvinylpoly-pyrrolidon) | + | - |

+    gute quanititative Adsorption

(+)    gute, aber nicht quanititative Adsorption

-    keine Adsorption

(-)    geringfügige Adsorption.

Von den in der Tabelle aufgeführten Mitteln erweisen sich als gut geeignet Celite 545, PVPP, begrenzt geeignet Na-Bentonit, Kieselgel und Kieselgur. Das vom Fungizid durch Adsorption befreite Gemisch von Lösungsmittel und Extraktionsstoffen wird nach Dichteerniedrigung, durch z.B. Druckabsenkung und $CO_2$-Verdampfung, getrennt. Das von den Hopfeninhaltsstoffen befreite $CO_2$ wird anschließend verflüssigt und wieder dem Extraktionskreislauf zugeführt. In besonders vorteilhafter Weise wird das Gemisch nach der Adsorption ohne Druckabsenkung zurückgeführt, d.h. mit einer Kreislaufpumpe wird ein isobarer Lösungsmittelkreislauf aufrechterhalten. Zum einen werden die Kompressionskosten eingespart, zum anderen werden lediglich bis zur Sättigung des Lösungsmittels Hopfenwirkstoffe gelöst. Sind die gesuchten Pflanzenschutzmittel extrahiert und adsorbiert, kann der Adsorptionsautoklav aus dem Kreislauf genommen und können wie bei einer normalen Extraktion die optimalen Bedingungen eingestellt werden. Für jedes Pflanzenschutzmittel ist ein spezifisch geeignetes Adsorptionsmittel, das die Hopfeninhaltsstoffe nicht oder nur wenig erfaßt, zu finden. Das "Adsorptionsmittel" kann dabei aus einem oder mehreren Mitteln bestehen, wobei eine Hintereinanderschaltung mehrer Mittel oder eine Mischung vorstellbar ist. Zu beachten ist auch, daß für jedes Adsorptionsmittel ein optimaler Temperaturbereich einzustellen ist, der eine mögliche Desorption vermeidet.

Die folgenden Vergleichsbeispiele stellen die Extrahierbarkeit eines unpolaren Pflanzenschutzmittels, wie Folpet, bei Anwendung üblicher Verfahrenstechniken dar. Es wurde ein stark mit 78.9 ppm Folpet belasteter Hopfen eingesetzt. Als Lösungsmittel dienten Hexan, Dichlormethan, 100 % Ethanol, ein Gemisch aus 10 % Wasser und 90 % Ethanol sowie $CO_2$ unter drei Bedingungen. Die folgende Tabelle zeigt die Folpet-Reste nach einer erschöpfenden Harzextraktion in den Hopfentrebern, die Folpet-Gehalte in den Extrakten, sowie in der letzten Spalte die prozentualen Wiederfindungsraten, bezogen auf die 78.9 ppm:

| Extraktionsmittel | ppm Folpet i.d.Treber | Folpet im Extrakt | Wiederfindungs- rate in % relativ |
|---|---|---|---|
| Hexan | 1.2 | 533.5 | 82.5 |
| Dichlormethan | n.n. | 429.1 | 76.1 |
| 100 % Ethanol | n.n. | 386.5 | 68.6 |
| 90 % Ethanol + 10 % Wasser | n.n. | 326.3 | 66.2 |
| $CO_2$/70 bar 15°C | 3.8 | 635.8 | 95.4 |
| $CO_2$/150 bar 25°C | 4.5 | 603.5 | 91.2 |
| $CO_2$/220 bar 50°C | 2.6 | 606.4 | 94.1 |
| $CO_2$300 bar 50°C | 1.6 | 653.1 | 97.8 |

In jedem dieser untersuchten Fälle steht einer erschöpfenden Wertstoffextraktion eine nahezu quantitative Extraktion des Folpets gegenüber. Die mangelhaften Wiederfindungsraten des Folpet bei den organischen Lösungsmittelextraktionen lassen auf eine Zersetzung des Fungizids schließen, die je nach der thermischen Belastung bei der Eindampfung ein unterschiedliches Ausmaß annehmen kann. Wie zu erwarten war, ist keines der Verfahren in der Lage, Extrakte spezifisch nur mit Hopfeninhaltsstoffen ohne das Fungizid Folpet zu erzeugen.

Anhand der folgenden Vergleichsbeispiele wird aufgezeigt, welche Möglichkeit zur Erfassung des Folpets in einer ersten Stufe durch die jeweilige Wahl von Druck und Temperatur des Kohlendioxids besteht, ohne andererseits schon wertvolle Hopfenharze oder -öle zu extrahieren. Hopfenpellets mit 12.6 ppm Folpet wurden jeweils 3 h bei verschiedenen Paramatern mit $CO_2$ durchströmt. In der folgenden Tabelle zeigt die erste Spalte die restlichen Folpet-Gehalte in den Pellets nach der ersten Extraktionsstufe. Die zweite Spalte gibt die auf den Ausgangsgehalt berechnete Dekontaminationsrate wieder, und die dritte Spalte gibt an, welche relative Ausbeute an Hopfenharzen bzw. -ölen, bezogen auf den Ausgangsgehalt, bereits in der ersten Stufe mit dem Folpet mitgehen.

| Extraktions- parameter | ppm Folpet i.d. Hopfenpellets | % Entfernungs- rate an Folpet | Extraktaus- beute % relativ |
|---|---|---|---|
| 100 bar/20°C | 0.6 | 95 | 34.3 |
| 100 Bar/60°C | 1.9 | 85 | 19.4 |
| 90 bar/60°C | 4.8 | 62 | 5.1 |
| 70 bar/40°C | 8.3 | 34 | 2.5 |

In jedem Falle erfaßt man bei der Reinigungsstufe deutlich mehr Folpet äls Hopfenharze. Während jedoch im Falle einer wirkungsvollen Entfernung des Folpets nicht unerhebliche Mengen an Wertstoffen extrahiert werden, die als stark kontaminiert anzusehen sind, würde eine nahezu quantitative Entfernung des Folpets ohne das Lösen von Extraktionsstoffen unwirtschaftlich lange dauern und kann daher nur bei sehr geringen Ausgangsmengen in Betracht gezogen werden.

Wesentlich vorteilhafter erweist es sich daher, das oder die Pestizide ohne die Hopfenharze bzw. -öle an ein Adsorbens zu binden. Als Verfahrensbeispiele dienen Hopfenpellets mit 12.6 ppm Folpet. Sie werden in einem ersten Schritt dekontaminiert, das Folpet an das Adsorbens gebunden und der zwangsläufig mitextrahierte Harz- und Ölanteil durch Dichteerniedrigung abgeschieden. Denkbar ist es, unter normalen Extraktionsbedingungen (also höherem Druck) $CO_2$ durchzupumpen. Diese Variante erweist sich besonders bei sehr niedrigen Ausgangsdaten als vorteilhaft. In jedem Fall empfiehlt es sich jedoch, nach der Entfernung des Pestizides den Adsorptionsautoklaven zu umgehen, da dadurch die jeweilige Standzeit des Adsorptionsmittels verlängert werden kann. Das Adsorptionsmittel wurde im vorliegenden Fall im Verhältnis 1:10 zur Hopfenpelletschüttung vorgelegt. Die Resultate zeigen allesamt, daß es mit dem beschriebenen Verfahren gelingt, Folpet-freie Extrakte zu produzieren. Das unerwünschte Pestizid bleibt im Adsorptionsmittel, ohne daß Zersetzungsprodukte entstehen.

| Extraktions-parameter 1. Stufe | 2. Stufe | Adsorptionsmittel in der 1. Stufe | ppm Folpet im Gesamtextrakt | ppm Folpet i.d. Trebern | Relative Extraktionsausbeute % 1. Stufe | 2. Stufe |
|---|---|---|---|---|---|---|
| 220/50 | 220/50 | | | | | |
| 1h | 2h | Kieselgur | 0.5 | n.n. | 63 | 34 |
| 1h | 2h | Kieselgel | 0.3 | n.n. | 64 | 28 |
| 1h | 2h | Bentonit | 0.2 | n.n. | 61 | 35 |
| 1h | 2h | Celite 545 | n.n. | n.n. | 66 | 32 |
| 1h | 2h | PVPP | n.n. | n.n. | 62 | 31 |
| 100/60 | 220/50 | | | | | |
| 1.5h | 2.5h | Kieselgur | 0.3 | n.n. | 10 | 88 |
| 1.5h | 2.5h | Kieselgel | 0.2 | n.n. | 14 | 86 |
| 1.5h | 2.5h | Bentonit | 0.2 | n.n. | 15 | 82 |
| 1.5h | 2.5h | Celite 545 | n.n. | n.n. | 12 | 87 |
| 1.5h | 2.5h | PVPP | n.n. | n.n. | 13 | 87 |

**Patentansprüche**

1. Verfahren zur Abtrennung der Rückstände von unpolaren Pflanzenschutzmitteln aus Hopfen unter gleichzeitiger Extraktion von unpolaren Inhaltsstoffen, bei dem der Hopfen in einer ersten Stufe mit einem verdichteten Gas, insbesondere $CO_2$, als Lösungsmittel behandelt wird, wobei ein Gemisch von Pflanzenschutzmittel und unter den gewählten Bedingungen löslichen Inhaltsstoffen extrahiert wird, dadurch gekennzeichnet, daß das Lösungsmittel mit dem darin enthaltenem Gemisch in einer zweiten Stufe, bei den gleichen Druckbedingungen wie bei der Extraktion über ein Adsorbens, das Pflanzenschutzmittel bindet aber gegenüber Hopfeninhaltsstoffen keine Adsorptionswirkung entfaltet, geleitet wird, wodurch Pflanzenschutzmittel selektiv aus dem Gemisch entfernt werden.

2. Verfahren nach Anspruch 1, dadurch gekennzeichnet, daß in der ersten Stufe bei Drücken von 70-120 bar und Temperaturen von 40-80 ° C gearbeitet wird.

3. Verfahren nach Anspruch 1 oder 2, dadurch gekennzeichnet, daß die gelösten Inhaltsstoffe des Hopfens nach der Adsorption der Pflanzenschutzmittel durch Dichteerniedrigung des Lösungsmittels aus diesem abgetrennt werden.

4. Verfahren nach Anspruch 3, dadurch gekennzeichnet, daß die gelösten Inhaltsstoffe bei Drücken zwischen 40-60 bar und Temperaturen oberhalb der Dampfdruckkurve abgeschieden werden, bei denen das Lösungsmittel gasförmig vorliegt.

5. Verfahren nach Ansprüchen 3-4, dadurch gekennzeichnet, daß das von den Hopfeninhaltsstoffen befreite Lösungsmittel wieder verdichtet und der Extraktionsstufe zugeführt wird.

6. Verfahren nach Anspruch 1 oder 2, dadurch gekennzeichnet, daß das mit Hopfeninhaltsstoffen beladene Lösungsmittel nach der Adsorption der Pflanzenschutzmittel in einem isobaren Kreislauf zur Extraktionsstufe zurückgeführt wird so lange, bis die Pflanzenschutzmittel aus dem Hopfen extrahiert sind.

7. Verfahren nach Anspruch 6, dadurch gekennzeichnet, daß die Adsorptionsstufe nach Extraktion und Adsorption der Pflanzenschutzmittel aus dem Kreislauf genommen wird und die Extraktion der Hopfeninhaltsstoffe unter optimalen Bedingungen fortgesetzt wird.

8. Verfahren nach einem der Ansprüche 1 bis 7, dadurch gekennzeichnet, daß das Pflanzenschutzmittel bei einer Temperatur adsorbiert wird, bei der das Adsorptions/Desorptionsgleichgewicht auf der Seite der Adsorption liegt.

9. Verfahren nach einem der Ansprüche 1 bis 8, dadurch gekennzeichnet, daß Kieselgur, Kieselgel, Bentonit, PVPP od.dgl. als Adsorbentien verwendet werden.

10. Verfahren nach einem der Ansprüche 1 bis 9, dadurch gekennzeichnet, daß mehrere Adsorbentien nacheinander oder ein Gemisch derselben verwendet wird.

**Claims**

1. Process for the separation of residues of non-polar plant protective agents from hops with simultaneous extraction of non-polar components, wherein in a first stage the hops are treated with a compressed gas, in particular $CO_2$, as a solvent, and a mixture of plant protective agent and components that are soluble in the selected conditions is extracted, characterised in that the solvent with the mixture contained therein is passed to a second stage, under the same pressure conditions as in extraction, via an absorbent that binds plant protective agent but evolves no adsorption effect *vis−a−vis* the components of hops, whereby plant protective agents are selectively removed from the mixture.

2. Process according to claim 1, characterised in that the first stage is carried out at pressures of 70-120 bar and temperatures of 40-80 ° C.

**3.** Process according to claim 1 or 2, characterised in that the dissolved components of the hops are separated from the solvent after adsorption of the plant protective agents by a reduction in the density of the solvent.

**4.** Process according to claim 3, characterised in that the dissolved components are precipitated at pressures of between 40 and 60 bar and temperatures above the vapour pressure curve, at which the solvent is in a gaseous state.

**5.** Process according to claims 3-4, characterised in that the solvent freed from hops components is condensed again and fed to the extraction stage.

**6.** Process according to claim 1 or 2, characterised in that after adsorption of the plant protective agents, solvents charged with hops components are returned to the extraction stage in an isobar circuit, until the plant protective agents are extracted from the hops.

**7.** Process according to claim 6, characterised in that the adsorption stage is removed from the circuit after extraction and adsorption of the plant protective agents, and the extraction of hops components is continued under optimum conditions.

**8.** Process according to one of claims 1 to 7, characterised in that the plant protective agent is adsorbed at a temperature at which the adsorption/desorption balance lies on the adsorption side.

**9.** Process according to one of claims 1 to 8, characterised in that diatomite, silica gel, bentonite, PVPP or the like are used as adsorbents.

**10.** Process according to one of claims 1 to 9, characterised in that a plurality of adsorbents are used one after another or a mixture thereof is used.

**Revendications**

**1.** Procédé de séparation des résidus de pesticides non polaires à partir de houblon avec extraction simultanée de constituants non polaires, dans lequel le houblon est traité, dans une première étape, à l'aide d'un gaz comprimé, notamment de $CO_2$ en tant que solvant, moyennant quoi on extrait un mélange de pesticides et de constituants solubles dans les conditions choisies, caractérisé en ce que, dans une deuxième étape, on fait passer le solvant avec le mélange s'y trouvant dans les mêmes conditions de pression que lors de l'extraction sur un adsorbant qui fixe le pesticide mais ne déploie aucun effet adsorbant vis à vis des constituants du houblon, grâce à quoi les pesticides sont sélectivement éliminés du mélange.

**2.** Procédé selon la revendication 1, caractérisé en ce que, dans la première étape, on opère sous des pressions de 70-120 bars et à des températures de 40 à 80°C.

**3.** Procédé selon la revendication 1 ou 2, caractérisé en ce que, après l'adsorption des pesticides, les constituants de houblon dissous sont séparés du solvant par abaissement de sa densité.

**4.** Procédé selon la revendication 3, caractérisé en ce que les constituants dissous sont séparés sous des pressions entre 40 et 60 bars et à des températures au-dessus de la courbe de tension de vapeur, auxquelles le solvant existe à l'état gazeux.

**5.** Procédé selon les revendications 3 et 4, caractérisé en ce que le solvant débarrassé des constituants de houblon est à nouveau comprimé et envoyé dans l'étage d'extraction.

**6.** Procédé selon la revendication 1 ou 2, caractérisé en ce que, après l'adsorption des pesticides, le solvant chargé de constituants de houblon est renvoyé, en circuit isobare, vers l'étage d'extraction jusqu'à ce que les pesticides soient extraits du houblon.

**7.** Procédé selon la revendication 6, caractérisé en ce que, après extraction et adsorption des pesticides, l'étape d'adsorption est retirée du circuit et que l'extraction des constituants du houblon se poursuit dans des conditions optimales.

8. Procédé selon l'une des revendications 1 à 7, caractérisé en ce que le pesticide est adsorbé à une température à laquelle l'équilibre adsorption/désorption se situe du côté de l'adsorption.

9. Procédé selon l'une des revendications 1 à 8, caractérisé en ce que du kieselguhr, du gel de silice, de la bentonite, de la PVPP ou analogues sont utilises comme adsorbants.

10. Procédé selon l'une des revendications 1 à 9, caractérisé en ce qu'on emploie plusieurs adsorbants les uns après les autres ou un mélange de ceux-ci.